# EUROPÄISCHE PATENTANMELDUNG

(11) **EP 2 783 834 A1**
(43) Veröffentlichungstag der Anmeldung: **01.10.2014**
(21) Anmeldenummer: 13160849.9
(22) Anmeldetag: 25.03.2013
(51) Int. Cl.: B29C 61/06

(54) **Polymer oder Polymernetzwerk**

(71) Anmelder: Technische Universität Dortmund, 44227 Dortmund (DE)
(72) Erfinder: Tiller, Jörg Christian, 58313 Herdecke (DE); Quitmann, Dominik, 44137 Dortmund (DE); Katzenberg, Frank, 59425 Unna (DE)
(74) Vertreter: Michalski, Stefan

(57) **Zusammenfassung**

Der Gegenstand der Erfindung betrifft die Verwendung eines Polymers oder Polymernetzwerks, welches sich in einem gedehnten Ausgangszustand befindet, als Sensor und/oder Kraftelement, dadurch gekennzeichnet, dass dieses Polymer oder Polymernetzwerk
- unter Aufnahme eines oder mehrerer chemischer Stoffe aus der Gas- und/oder Flüssigphase eine Kraft aufbaut und nach Abgabe des chemischen Stoffes oder der chemischen Stoffe die Kraft sich zumindest teilweise oder vollständig abbaut; oder
- unter Aufnahme eines oder mehrerer chemischer Stoffe aus der Gas- und/oder Flüssigphase eine Kraft sich zumindest teilweise oder vollständig abbaut und nach Aufnahme des chemischen Stoffes oder der chemischen Stoffe sich die Kraft aufbaut;

wobei der Kraftaufbau oder Kraftabbau mehrfach wiederholbar ist.

## Beschreibung

### Gebiet der Erfindung

Die Erfindung betrifft die Verwendung eines Polymers oder Polymernetzwerks als Kraftelement.

### Hintergrund der Erfindung

Polymere mit geeigneter Konfiguration sind prinzipiell kristallisationsfähig. Diese Kristalle bilden sich von selbst oder induziert durch einen äußeren Einfluss. Die Schmelztemperatur dieser Kristalle, hängt im Wesentlichen von Konstitution und Konfiguration des Polymers ab, wird aber auch von der Größe, Form und Art der Kristallite (Morphologie) beeinflusst. Die Schmelztemperatur variiert in Abhängigkeit der Morphologie nur in einem kleinen Temperaturbereich. Polymernetzwerke sind dreidimensional miteinander verknüpfte Polymerketten, welche über Vernetzungspunkte miteinander verknüpft sind und durch Kristallisation nach Dehnung kann die gestreckte Form formstabilisiert werden.

Bei der Schmelztemperatur der Kristalle setzt die Relaxation des Polymernetzwerkes in seine ursprüngliche Form ein. Die Schmelztemperatur der Kristalle im gedehnten Zustand weicht nur geringfügig von der Schmelztemperatur im vollständig relaxierten Zustand ab. Für eine Formänderung müssen alle Kristalle vollständig gemäß eines Phasenübergangs 1. Ordnung schmelzen. Diese Schmelztemperatur entspricht somit der Schalttemperatur der im Stand der Technik bekannten Formgedächtnispolymere.

Die Eigenschaft des Formgedächtnisses ist keine stoffspezifische Eigenschaft, sondern resultiert vielmehr aus der Struktur, bzw. der Morphologie der Materialien. So sind die Formgedächtniseffekte bei einigen metallischen Legierungen schon länger bekannt als bei Kunststoffen, welchen jedoch das größte Potential zukommt. Dennoch sind bisher nur wenige Formgedächtnispolymere beschrieben, woraus die vermehrte Forschung auf diesem Sektor resultiert.

Hierbei wird ein Polymer oder Polymernetzwerk zunächst durch konventionelle Verarbeitungsmethoden in seine dauerhafte Gestalt gebracht. Durch mechanische Verformung bei Temperaturen oberhalb der Glasübergangstemperatur bzw. unter- oder oberhalb der Schmelztemperatur der Polymerkristalle (=Schalttemperatur) wird dann das Polymer deformiert und anschließend abgekühlt und erhält dadurch eine vorübergehende Gestalt. Diesen Vorgang nennt man auch Programmierung. Erst durch Erwärmung des Polymers auf Temperaturen oberhalb der Glasübergangs- bzw. Auflösungstemperatur der Kristalle (=Schalttemperatur) kehrt dieses in seine ursprüngliche Gestalt zurück.

Die Verwendung von Formgedächtnispolymeren als Sensor- oder Kraftelement in seiner vorübergehenden Gestalt in Bezug auf chemische Stoffe ist bisher im Stand der Technik nicht bekannt.

Überraschenderweise wurde nunmehr gefunden, dass derartige Polymere in ihrer vorrübergehenden Gestalt, d.h. in einem gedehnten, formstabilen Zustand, durch Aufnahme von Stoffen, insbesondere gasförmigen und/oder flüssigen Stoffen, eine Kraft aufbauen, und nach Abgabe des gasförmigen und/oder flüssigen Stoffes die vorrübergehende Gestalt wieder annehmen und eine Kraft wieder abbauen.

### Beschreibung der Erfindung

Die Aufgabe der Erfindung ist es ein Polymer oder Polymernetzwerks, welches sich in einem gedehnten Ausgangszustand befindet, als Sensor und/oder Kraftelement zur Verfügung zu stellen, wobei das Polymer oder Polymernetzwerk
- unter Aufnahme eines oder mehrerer chemischer Stoffe aus der Gas- und/oder Flüssigphase eine Kraft aufbaut und nach Abgabe des chemischen Stoffes oder der chemischen Stoffe die Kraft sich zumindest teilweise oder vollständig abbaut; oder
- unter Aufnahme eines oder mehrerer chemischer Stoffe aus der Gas- und/oder Flüssigphase eine Kraft sich zumindest teilweise oder vollständig abbaut und nach Aufnahme des chemischen Stoffes oder der chemischen Stoffe sich die Kraft aufbaut; wobei der Kraftaufbau oder Kraftabbau mehrfach wiederholbar ist.

Solche Polymer oder Polymernetzwerke können sich beispielsweise in einem gedehnten, formstabilen, teilkristallisierten Ausgangszustand befinden, wobei, dieses Polymer oder Polymernetzwerk unter Aufnahme eines oder mehrerer bestimmter chemischer Stoffe aus der Gas- und/oder Flüssigphase eine Kraft aufbaut und bei Entfernung derselben wieder abbaut, und wobei der Kraftaufbau oder Kraftabbau mehrfach wiederholbar ist.

Das zur Steuerung einer Kraft und/oder als Sensor verwendbare Polymer oder Polymernetzwerk, kann um eine Kraft aufzubauen, zwischen wenigstens einem Befestigungspunkt und wenigstens einem Kraftangriffspunkt fixiert sein. Nachfolgend wird diese Anordnung auch als fixiert bezeichnet.

Patentgemäß verwendbare Polymere oder Polymernetzwerke liegen in einem gedehnten, formstabilen Zustand vor, welcher einen in Abhängigkeit der Dehnungsrate und/oder der Umgebungstemperatur und/oder der Dehnung einstellbaren Triggerpunkt aufweist, wobei der Triggerpunkt innerhalb eines Bereichs eingestellt ist, der unterhalb der Temperatur des theoretischen Schmelzpunktes und oberhalb der Umgebungstemperatur liegt. Die Zunahme und Abnahme der Kraft kann in einem definierten Bereich gesteuert werden, ohne dass durch Aufgabe des Triggers die Kristalle des Polymers oder Polymernetzwerks vollständig oder teilweise zerreißen/aufgelöst werden. Durch eine konstante Dehnung kann das gespannte Polymer oder Polymernetzwerk nicht in den entspannten Ursprungszustand zurückkehren.

Die erfindungsgemäße Aufgabe wird durch die Verwendung eines Polymer oder Polymernetzwerk gelöst, geeignet zur Steuerung einer Kraft die von wenigstens einem Befestigungspunkt auf wenigstens einen Kraftangriffspunkt wirkt, welches in einem gedehnten, formstabilen Zustand, mit einem in Abhängigkeit der Dehnungsrate und/oder der Umgebungstemperatur einstellbaren Triggerpunkt, vorliegt, wobei der Triggerpunkt innerhalb eines Bereichs eingestellt ist, der unterhalb der Temperatur des theoretischen Schmelzpunktes und oberhalb der Umgebungstemperatur liegt, wobei das Polymer oder Polymernetzwerk in einem gespannten, formstabilen Zustand, verbleibt, wobei durch Auslösung des Triggers die Kristalle des Polymers oder Polymernetzwerks zerreißen, wobei sich das gespannte Polymer oder Polymernetzwerk entspannt, wobei unter Aufnahme eines Lösungsmittels des gedehnten, im gedehnten Zustand formstabilen, Polymers oder Polymernetzwerks, welches mit wenigstens einem Befestigungspunkt und wenigstens einem Kraftangriffspunkt verbunden ist, eine Kraft vom Befestigungspunkt auf den Kraftangriffspunkt wirkt oder die wirkende Kraft zunimmt und/oder durch Abgabe des Lösungsmittels, die Kraft die vom Befestigungspunkt auf den Kraftangriffspunkt wirkt, abnimmt.

Im Sinne dieser Erfindung bezeichnet man eine vorrübergehende Gestalt als einen Zustand, bei dem das Polymer oder Polymernetzwerk aus seinem ursprünglich vollständig entspannten Zustand in einen gedehnten, selbstständig formstabilen Zustand überführt wird.

Als "formstabil" oder "selbständig formstabil" wird in der vorliegenden Beschreibung ein Polymer oder Polymernetzwerk bezeichnet, das in einem gedehnten Zustand verbleibt, ohne dass es durch Einwirkung äußerer Kräfte in diesem Zustand gehalten wird.

Im Sinne dieser Erfindung bedeutet unter die Umgebungstemperatur abkühlt, dass das gedehnte, im gedehnten Zustand formstabile Polymer oder Polymernetzwerk zunächst die Temperatur der Umgebungstemperatur besitzt und in Folge des Zerreißens der Kristalle, d.h. beim Übergang vom formstabilen Zustand in den ungedehnten Zustand, sich die Temperatur des Polymers oder des Polymernetzwerks im ungedehnten Zustand unter die Temperatur seiner Umgebung abkühlt.

Der ungedehnte Zustand des Polymer oder Polymernetzwerk wird nachfolgend auch als "relaxierter Zustand", "entspannter Zustand" oder "nicht formstabiler Zustand" bezeichnet.

Im Sinne dieser Erfindung bedeutet formstabil bzw. formstabiler Zustand, nachfolgend auch als formstabilisierter bzw. formstabilisierender Zustand bezeichnet, im Zusammenhang mit dem gedehnten Polymer oder Polymernetzwerk, dass das Polymer oder Polymernetzwerk in einem gedehnten Zustand verbleibt, wobei das gespannte Polymer oder Polymernetzwerk durch Einwirkung eines äußeren Reizes relaxiert werden kann.

Zur Steuerung einer Kraft oder zur Verwendung als Sensor, wird das Polymer oder Polymernetzwerk mit wenigstens einem Befestigungspunkt und wenigstens einem Kraftangriffspunkt verbunden. Im gespannten, formstabilen Zustand kann das Polymer oder Polymernetzwerk wenigstens einen Stoff, vorzugsweise ein Lösemittel oder Gas aufnehmen, wobei durch die Aufnahme des Stoffes eine Kraft vom Befestigungspunkt auf den Kraftangriffspunkt wirkt. Mit der Zunahme des aufgenommenen Stoffes, erhöht sich die Kraft, die vom Befestigungspunkt auf den Kraftangriffspunkt wirkt. Erst nach Überschreiten einer für jedes erfindungsgemäß verwendbare Polymer oder Polymernetzwerk und in Abhängigkeit des eingestellten Triggerpunktes sowie in Abhängigkeit des jeweiligen Lösemittels zu ermittelnden Stoffaufnahme-Grenzmenge kommt es zu einem Zerreißen der Kristalle des Polymers oder Polymemetzwerks.

Dadurch, dass das gedehnte, im gedehnten Zustand formstabile, Polymer oder Polymernetzwerk mit wenigstens einem Befestigungspunkt und wenigstens einem Kraftangriffspunkt verbunden ist, kann nach Erreichen der Aufnahme des Stoffes die zum Auflösen der Kristalle des Polymers oder Polymernetzwerks führt, dass Polymer oder Polymernetzwerk nur teilweise entspannt sein, weil die Verbindung des Polymers oder Polymernetzwerks mit dem Befestigungspunkt und dem Kraftangriffspunkt eine vollständige Relaxation verhindern kann. Das Polymer oder Polymernetzwerk als solches, d.h. in einem nicht eingespannten Zustand, würde beim Auflösen der Kristalle vollständig relaxieren, d.h. in den ungedehnten Zustand zurückkehren.

Im Sinne dieser Erfindung wird unter einem "ungedehnten Zustand", "relaxierten Zustand", "entspannten Zustand" oder "nicht formstabilen Zustand" des Polymer oder Polymernetzwerk ein Polymer oder Polymernetzwerk verstanden, welches beim Auflösen der Kristalle in einem nicht eingespannten Zustand, relaxieren, d.h. in den ungedehnten Zustand zurückkehren würde.

Ein erfindungsgemäß verwendbares Polymer oder Polymernetzwerk kann sich bei der Relaxation vom formstabilen, gedehnten Zustand in den ungedehnten Zustand abkühlen und zwar unterhalb der Umgebungstemperatur.

Gemäß einer erfindungsgemäßen Verwendung eines gedehnten, im gedehnten Zustand formstabilen, Polymers oder Polymernetzwerks, zur Steuerung einer Kraft, kann das gedehnte, im gedehnten Zustand formstabile Polymer oder Polymernetzwerk verbunden mit wenigstens einem Befestigungspunkt und wenigstens einem Kraftangriffspunkt, vor der Aufnahme eines chemischen Stoffes, eine Kraft von 0 N aufweisen, die auf den Kraftangriffspunkt wirkt.

Chemische Stoff die vom Polymer oder Polymernetzwerk aufgenommen werden können sind bei Raumtemperatur gasförmige oder flüssige Stoffe, vorzugsweise ein polares oder unpolares Lösungsmittel oder gasförmiger Stoff, oder ein Gemisch aus polarem und unpolarem Lösungsmitteln oder gasförmigen Stoffen ist, wobei das Lösungsmittel oder der gasförmige Stoff bevorzugt unpolar sind.

Ohne auf eine bestimmte Theorie festgelegt zu sein, wird angenommen, dass sich das gedehnte, formstabile Polymer oder Polymernetzwerk auf einem erhöhten, energetisch stabilen Energieniveau befindet, so dass es einer zusätzlichen Aktivierungsenergie, nachfolgend auch als äußerer Reiz oder Trigger bezeichnet, bedarf, damit das gespannte Polymer oder Polymernetzwerk in seinen energetisch stabileren, ungespannten Zustand überführt wird. Ohne diesen äußeren Reiz bzw. Trigger verbleibt das erfindungsgemäß verwendbare Polymer oder Polymernetzwerk in seinem gespannten Zustand. Durch die Aufnahme eines Stoffes, vorzugsweise eines unpolaren Lösungsmittels, des gedehnten, im gedehnten Zustand formstabilen, Polymers oder Polymernetzwerks, welches mit wenigstens einem Befestigungspunkt und wenigstens einem Kraftangriffspunkt verbunden ist, wirkt eine Kraft auf den Kraftangriffspunkt die mit zunehmender Aufnahme des Lösungsmittels zunimmt, bis der Triggerpunkt erreicht ist und die Kristalle des Polymers oder Polymernetzwerks zerreißen.

Überraschend wurde gefunden, dass die Aufnahme bestimmter Mengen eines Stoffes zunächst nicht ausreicht die Aktivierungsenergie aufzubringen, damit das gespannte Polymer oder Polymernetzwerk in seinen energetisch stabileren, ungespannten Zustand zurückgeführt wird. Vielmehr tritt bei der Aufnahme eines Lösungsmittels, vorzugsweise eines unpolaren Lösungsmittels, eine Kraft auf, die zunächst mit zunehmender Menge an aufgenommenem Lösungsmittel zunimmt.

Es wurde ferner überraschend gefunden, dass bei einer Verringerung der aufgenommen Lösungsmittelmenge die Kraft, die auf den Kraftangriffspunkt wirkt abnimmt.

Die Kraft, vor der Aufnahme eines Lösungsmittels, die von dem Befestigungspunkt auf den Kraftangriffspunkt wirkt, kann 0 N ausmachen oder die Kraft kann kleiner sein als die Kraft die nach der Lösemittelaufnahme vom Befestigungspunkt auf den Kraftangriffspunkt wirkt, ohne Auslösung des Triggerpunktes.

Gemäß einer weiteren Verwendung des Polymers oder Polymernetzwerks zur Steuerung einer Kraft, die von wenigstens einem Befestigungspunkt auf wenigstens einen Kraftangriffspunkt wirkt, kann die Ausbildung bzw. Zunahme der Kraft durch Aufnahme eines Lösungsmittels, die vom Befestigungspunkt auf den Kraftangriffspunkt wirkt und die Abnahme der Kraft, die vom Befestigungspunkt auf den Kraftangriffspunkt wirkt, durch Abgabe des Lösungsmittels, mehrfach wiederholt werden, ohne dass das Polymer oder Polymernetzwerk in einen vollständig nicht stabilisierten Zustand übergeht, der auch als ursprungszustand bezeichnet wird. Überraschenderweise kann das Polymer oder Polymernetzwerk in seinem kristallinen oder teilkristallinen Zustand gehalten werden, bei dem das Polymer oder Polymernetzwerk in einem gedehnten, selbstständig formstabilen Zustand vorliegt.

Gemäß einer weiteren bevorzugten Verwendung des Polymers oder Polymernetzwerks zur Steuerung einer Kraft, verhält sich die Aufnahme des flüssigen Stoffes und/oder Gases proportional zur Erhöhung der Kraft und/oder die Abnahme des flüssigen Stoffes und/oder Gases verhält sich proportional zur Reduzierung der Kraft, die auf wenigstens einen Kraftangriffspunkt wirkt.

Das Gas und/oder der flüssige Stoff kann ein polarer oder unpolarer Stoff oder ein Gemisch aus polarem und unpolarem Stoff sein, wobei das Gas und/oder der flüssige Stoff vorzugsweise ein unpolarer Stoff ist.

Bevorzugt verwendbare unpolare flüssige Stoffe können ausgewählt sein aus der Gruppe umfassend unpolare organische flüssige Stoffe, insbesondere Chloroform, Kohlenwasserstoffe, wie n-Heptan, Aromaten, wie Toluol, cyclische Verbindungen, wie Tetrahydrofuran und/oder Mischungen davon.

Überraschenderweise wurde festgestellt, dass bei Kontakt von fixierten, erfindungsgemäß verwendbaren Polymer oder Polymernetzwerk mit Lösungsmitteldampf, beispielsweise Toluol, eine sofortige Spannung, d.h. Kraft, aufgebaut wird, die bei Entfernung des Lösungsmittels abnimmt, und bis zu einer vollständigen Formerholung des Polymers oder Polymernetzwerks in den gedehnten, selbstständig formstabilen Zustand zurückführt.

Dieser Effekt wurde beispielsweise auch für andere Lösungsmittel wie Chloroform, n-Heptan und Tetrahydrofuran (THF) gefunden.

Es wurde gefunden, dass sich quantitative Informationen über die Wechselwirkungen zwischen Polymer oder Polymernetzwerk und Lösungsmitteldämpfe erhalten lassen, was erlaubt, dass sich die hier beschriebenen Polymere oder Polymernetzwerke als Sensor, insbesondere Lösungsmittelsensor, verwenden lassen.

Der Gegenstand der Erfindung wird anhand der Figuren näher erläutert.
- Figur 1: zeigt ein erfindungsgemäßes Spannungs-Dehnungs-Diagramm für ein erfindungsgemäßes Polymer oder Polymernetzwerk mit einem Dehnungs-, Fixierungs- sowie zwei Triggerschritten.
- Figur 2: zeigt die Kraftzunahme in Abhängigkeit von der Stoffaufnahme sowie die Kraftabnahme in Abhängigkeit von der Stoffabgabe und die entsprechende Wiederholbarkeit für ein erfindungsgemäß verwendbares Polymer oder Polymernetzwerk.
- Figur 3: zeigt den Aufbau zur Einspannung und Verwendung für ein erfindungsgemäß verwendbares Polymer und Aufgabe eines flüssigen und/oder gasförmigen Stoffes.
- Figur 4: zeigt ein gespanntes verwendungsgemäßes Polymer oder Polymernetzwerk das an einem Kraftangriffspunkt fixiert ist und durch die Aufnahme von dampfförmigem Toluol den Aufbau einer Kraft hervorruft.

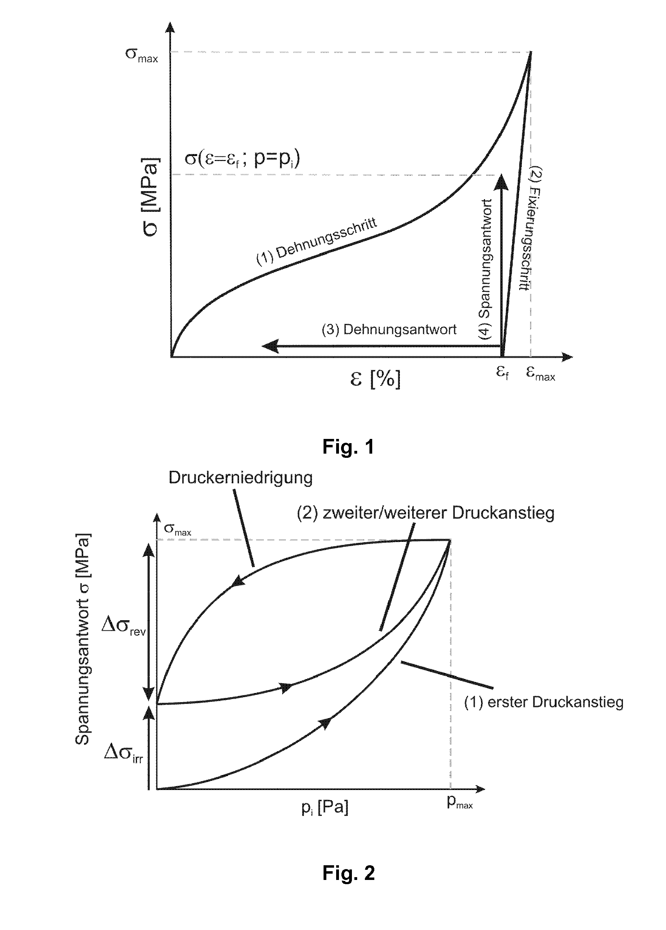

Die Fig. 1 zeigt ein Spannungs-Dehnungs-Diagramm eines erfindungsgemäß verwendbaren natürlichen Kautschuks, beginnend mit einem Reckschritt 1 indem die Probe gedehnt wird und einem Fixierungsschritt 2 indem die Spannung abgenommen und eine formstabile Gestalt erhalten wird. Ausgehend von diesem Zustand kann, wie in Antwort 3 gezeigt, durch eine spannungsfreie Relaxation das Formgedächtnis ausgelöst werden und die vor der Dehnung vorhandene, ursprüngliche Gestalt eingenommen werden. Darüber hinaus kann durch Einhaltung einer konstanten Dehnung, wie es in Antwort 4 dargestellt ist, eine Spannungsantwort durch eine Stoffaufnahme bzw. Stoffabgabe erhalten werden.

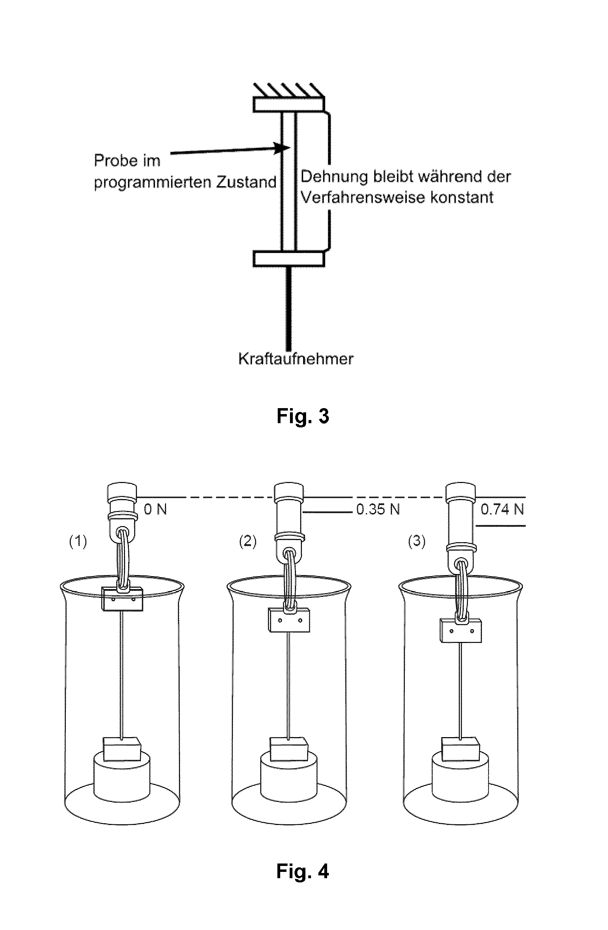

Fig. 2 zeigt die Entwicklung einer Kraft bedingt durch eine Stoffaufnahme eines fixierten erfindungsgemäß verwendbaren Polymers oder Polymernetzwerkes. Die Polymerprobe wurde zwischen einer festen Klemme und einer beweglichen Klemme an der Unterseite, die mit einem Kraftaufnehmer verbunden ist, um die durch Stoffaufnahme erzeugte Spannung zu ermitteln, montiert wie es in Fig. 3 dargestellt ist. Wie aus der Figur 2 hervorgeht nimmt die Kraft durch die Aufnahme eines Stoffes bis zu einem Maximalwert zu, was in dem Kurvenverlauf 1 dargestellt ist. Nach Abgabe des Stoffes kehrt das Polymer nicht vollständig in den Ausgangszustand zurück, was in dem Kurvenverlauf 2 dargestellt ist. Bei erneuter Stoffaufnahme nimmt die Kraft wieder zu, was in dem Kurvenverlauf 3 dargestellt ist. Der Kurvenverlauf zwischen 2 und 3 ist durch Auf- und Abgabe des Stoffes mehrfach reversibel.

Fig. 3 zeigt eine Einspannvorrichtung in der das Polymer oder Polymernetzwerk fixiert werden kann.

Fig. 4 zeigt für Naturkautschuk eine Reaktion auf Toluol, wobei der Naturkautschuk zwischen einem Krafthaltepunkt und einem Kraftangriffspunkt eingespannt ist. Die Kraft im Schritt 1 zunächst 0 N ausmacht. Durch Aufnahme von Toluol steigt die Kraft in einem ersten Schritt zunächst auf 0,35 und durch weitere Toluol-Aufnahme in einem zweiten Schritt auf 0,74 N.

Das Polymer oder Polymernetzwerk kann sich bei der Relaxation vom formstabilen, gedehnten Zustand in den ungedehnten Zustand deutlich abkühlen. Folglich können die erfindungsgemäß verwendbaren, gespannten, formstabilen Polymere oder Polymernetzwerke auch als latente Kältespeicher bezeichnet werden.

Die endotherme Wärmetönung des Polymers oder Polymernetzwerks kann in Folge des Zerreißens der Kristalle und der Relaxation in den ursprünglichen Zustand ≥ 0,1 J/g bis ≤ 100 J/g, vorzugsweise ≥ 1 J/g bis ≤ 90 J/g, weiter bevorzugt ≥ 5 J/g bis ≤ 70 J/g und insbesondere bevorzugt ≥ 7 J/g bis ≤ 50 J/g ausmachen.

Relaxation in den ursprünglichen Zustand bedeutet, dass sich die Kristalle auflösen und das Polymer oder Polymernetzwerk in den ungedehnten Zustand zurückgeführt wird.

Auslösen des Triggerpunktes im Sinne dieser Erfindung bedeutet, dass die für die Relaxation vom formstabilen, gespannten Zustand in den ungespannten Zustand notwendige Aktivierungsenergie dem System zugeführt wird.

Polymere oder Polymernetzwerke mit zerreißbaren Kristallen zeichnen sich dadurch aus, dass die Zersetzung der zerreißbaren Kristalle am Zersetzungspunkt nicht im Sinne eines Phasenübergangs 1. Ordnung erfolgt, wie es beispielsweise bei den im Stand der Technik bekannten Formgedächtnispolymeren der Fall ist.

Bei den im Stand der Technik bekannten Formgedächtnispolymeren schmelzen die Kristalle bei der Relaxation, d.h. es findet ein Phasenübergang 1. Ordnung statt.

Überraschenderweise wurde gefunden, dass die gespeicherte Energie in den erfindungsgemäß verwendbaren gedehnten Polymeren oder Polymernetzwerken an oder unterhalb des Triggerpunktes bzw. der Triggertemperatur ausschließlich ohne Anwendung extrinsischer Energien, Spannungen, oder dergleichen erhalten bleibt.

Bei den erfindungsgemäß verwendbaren Polymeren oder Polymernetzwerken liegen Kristalle vor, die durch Auslösen eines äußeren Reizes, auch nachfolgend als Trigger bezeichnet, sprichwörtlich zerreißen bzw. kollabieren. Beim Entspannen dieser gedehnten Polymere oder Polymernetzwerke mit zerreißbaren Kristallen kann eine Abkühlung des entspannten Polymers oder Polymernetzwerks unterhalb der Umgebungstemperatur beobachtet.

Bei erfindungsgemäß verwendbaren Polymeren oder Polymernetzwerken mit zerreißbaren Kristallen kann es sich sozusagen um einen latenten Kältespeicher handeln.

Die im Stand der Technik bekannten Formgedächtnispolymere weisen eine derartige Eigenschaften nicht auf, da das Auflösen der Kristalle, wie bereits oben ausgeführt nach einem Phasenübergang 1. Ordnung stattfindet.

Ohne auf eine bestimmte Theorie festgelegt zu werden, wird angenommen, dass es einen energetischen Zustand gibt, bei dem, beispielsweise durch eine besondere Art und Weise der Durchführung der Dehnung, ein formstabiler Spannungszustand ausgebildet wird, bei dem eine Kristallbildung und Kristallorientierung erfolgt, die die Kristalle sozusagen unter einen Druck setzen. Durch Auslösen beispielsweise eines äußeren Reizes löst sich das gebildete Kristallsystem auf. und löst sich nicht wie eigentlich erwartet nach einem Phasenübergang 1. Ordnung auf, d.h. die Kristalle schmelzen nicht sondern zerreißen explosionsartig, wobei es zu der überraschenden, deutlichen Abkühlung des entspannten erfindungsgemäß verwendbaren Polymers oder Polymernetzwerks kommen kann. Derartige erfindungsgemäß verwendbare Polymere oder Polymernetzwerke zur Steuerung einer Kraft mittels der Aufnahme oder Abgabe eines Lösungsmittels, sind im Stand der Technik bisher noch nicht beschrieben worden.

Bei dem formstabilen Spannungszustand der erfindungsgemäß verwendbaren Polymere und Polymernetzwerke wird angenommen, dass es sich hier um einen energetisch stabilen Zustand handelt, der sich von dem der Formgedächtnispolymere im gespannten Zustand unterscheidet.

Um das formstabil, gedehnte erfindungsgemäß verwendbare Polymer oder Polymernetzwerk in seinen ungedehnten, d.h. entspannten Zustand zurückzuführen, bedarf es eines äußeren Reizes. Durch diesen äußeren Reiz bzw. Trigger wird das System aus seinem energetischen Ruhezustand gebracht, wobei die Kristalle nicht im Sinne eines Phasenübergangs 1. Ordnung schmelzen, sondern kollabieren, d.h. auflösen, wobei sich das entspannte Polymer oder Polymernetzwerk unter die Umgebungstemperatur deutlich abkühlt.

Außerdem wurde überraschend gefunden, dass sich der Triggerpunkt der erfindungsgemäßen, gedehnten Polymere oder Polymernetzwerke über einen breiten Bereich einstellen lässt.

Beispielsweise lässt sich durch die Dehnungsrate, die Dehnung, die Temperatur während der Dehnung oder einem vorhergehenden Kontakt mit chemischen Stoffen die Triggertemperatur in einem breiten Bereich variieren, so dass man zum Einen den Zersetzungspunkt des erfindungsgemäßen Polymers oder Polymernetzwerks modulieren kann und zum Anderen die in dem System vorhandene latente Kältemenge einstellen kann.

Die Dehnung des Polymers oder Polymernetzwerks im gespannten, formstabilen Zustand, vor der Aufnahme eines Lösungsmittels, kann ≥ 30% bis ≤ 99%, vorzugsweise ≥ 40% bis ≤ 90%, weiter bevorzugt ≥ 45% bis ≤ 85%, noch weiter bevorzugt ≥ 50% bis ≤ 80%, weiterhin bevorzugt ≥ 55% bis ≤ 75 % und außerdem bevorzugt ≥ 60% bis ≤ 70% von der maximalen Zerreißdehnung des Polymers oder des Polymernetzwerks ausmachen.

Der Zersetzungspunkt, nachfolgend auch als Triggertemperatur bezeichnet, liegt deutlich unterhalb des theoretischen Schmelzpunktes des Polymers oder Polymernetzwerks.

In Folge des Zerreißens der Kristalle kühlt sich das Polymer oder Polymernetzwerk deutlich unterhalb der Umgebungstemperatur, welche gleich der Materialtemperatur ist, durch Aufnahme der latenten Schmelzwärme ab. Weiterhin ermöglicht die unkonventionelle Zersetzung dieser Kristalle ein triggern der Zersetzung ohne die Notwendigkeit eines zusätzlichen Wärmeeintrags in Höhe der Schmelzenthalpie.

Erfindungsgemäß wurde somit gefunden, dass man in Polymeren und/oder Polymernetzwerken neuartige Kristallzustände erzeugen kann, welche bei den Polymeren und/oder Polymernetzwerken zur Möglichkeit der latenten Kältespeicherung und Stabilisierung einer Dehnung führen, welche sich erheblich von den physikalischen Eigenschaften bisher bekannter Formgedächtnispolymere unterscheiden.

Die formstabil, gedehnten Polymere oder Polymernetzwerke im Sinne der vorliegenden Erfindung weisen einen Temperaturbereich auf, in dem die auflösbaren Kristalle durch einen "Trigger" aufgelöst werden können, ohne dass Wärme und/oder Energie eingebracht werden muss, der vorzugsweise mindestens der Schmelzwärme von ≥ 5% bis ≤ 99% der Gesamtheit aller auflösbaren Kristalle, vorzugsweise von ≤ 95% der Gesamtheit, insbesondere von ≤ 80% aller auflösbaren Kristalle, besonders bevorzugt von ≤ 50% aller auflösbaren Kristalle, insbesondere bevorzugt von ≤ 20% aller auflösbaren Kristalle, weiter bevorzugt von ≤ 10% aller auflösbaren Kristalle und noch bevorzugt von 5% der Gesamtheit aller auflösbaren Kristalle, des derartige Kristalle enthaltenden erfindungsgemäßen Polymers oder Polymernetzwerks, entspricht.

Der "Triggerpunkt" im Sinne der vorliegenden Erfindung ist ein Temperaturbereich, der unterhalb der Temperatur liegt, bei der die zerreißbaren Kristalle instabil werden, und oberhalb der Temperatur liegt, bei der es nicht mehr möglich ist, durch Einbringen eines äußeren Reizes, das Zerreißen der Kristalle auszulösen.

Die Triggertemperatur kann unterhalb der Temperatur liegen, bei der die zerreißbaren Kristalle instabil werden.

Demgegenüber weisen nach dem Stand der Technik hergestellte Formgedächtnispolymere keinen Triggerpunkt im Sinne der oben beschriebenen Merkmale auf.

Eine Triggertemperatur des erfindungsgemäßen Polymers oder Polymernetzwerks kann unterhalb der Temperatur liegen, bei der die zerreißbaren Kristalle instabil werden.

Ausbildung von Kristallen durch Aussetzen des Polymers oder Polymernetzwerkes und Ausbildung einer formstabilen Gestalt.

Die zur Ausbildung von auflösbaren Kristallen geeigneten Polymere oder Polymernetzwerke geeignet zur Verwendung gemäß der vorliegenden Erfindung können eine Kristallisationsrate von ≥ 10⁻⁷ %/s bis ≤ 100 %/s, vorzugsweise von ≥ 10⁻⁵ %/s bis ≤ 70 %/s, und insbesondere von ≥ 10⁻⁴ %/s bis ≤ 50 %/s aufweisen.

Das erfindungsgemäß verwendbare, gespannte, formstabile Polymer oder Polymernetzwerk mit auflösbaren Kristallen kann bei einer Umgebungstemperatur von > - 80 °C bis ≤ 400 °C, vorzugsweise > - 70 °C bis ≤ 350 °C, weiter bevorzugt > - 60 °C bis ≤ 300 °C, weiter bevorzugt > - 50 °C bis ≤ 250 °C, weiter bevorzugt > - 50 °C bis ≤ 250 °C, weiter bevorzugt > - 40 °C bis ≤ 200 °C, weiter bevorzugt > - 30 °C bis ≤ 150 °C, weiter bevorzugt > - 20 °C bis ≤ 100 °C, weiter bevorzugt > - 10 °C bis ≤ 80 °C, weiter bevorzugt ≥ 0 °C bis ≤ 60 °C, weiter bevorzugt ≥ 10 °C bis ≤ 50 °C, weiter bevorzugt ≥ 15 °C bis ≤ 45 °C und noch bevorzugt ≥ 20 °C bis ≤ 30 °C, durch Dehnen des Polymers oder Polymernetzwerkes ausgebildet werden.

Die auflösbaren Kristalle können durch Dehnen des Polymernetzwerkes ausgebildet werden, indem das Polymer oder Polymernetzwerk aus einem ungedehnten Ausgangszustand in einen gedehnten Zustand mittels einer Dehnungsrate des Polymers oder des Polymernetzwerkes von ≥ 10⁻⁷ %/s bis ≤ 10⁷ %/s, vorzugsweise von ≥ 10⁻⁶ %/s bis ≤ 10⁷ %/s, bevorzugt von ≥ 10⁻⁵ %/s bis ≤ 10⁵ %/s, weiter bevorzugt von ≥ 10⁻⁴ %/s bis ≤ 10⁴%/s, weiter bevorzugt von ≥ 10⁻³ %/s bis ≤ 10³ %/s, weiter bevorzugt von ≥ 10⁻² %/s bis ≤ 10² %/s, sowie 10 %/s ± 2 überführt wird.

Bei dem erfindungsgemäß verwendbaren Polymer oder Polymernetzwerk können die auflösbaren Kristalle, beispielsweise durch Dehnen des Polymers oder des Polymernetzwerks, vorzugsweise vor der Aufnahme eines Lösungsmittels, ausgebildet werden, wobei das Polymer oder Polymernetzwerk in dem gedehnten Zustand mit einer Haltezeit von ≥ 0 s bis < 1 d, vorzugsweise ≥ 0,05 s bis ≤ 12 h, weiter bevorzugt ≥ 0,1 s bis ≤ 6 h, noch bevorzugt ≥ 0,5 s bis ≤ 3 h, weiterhin bevorzugt ≥ 1 s bis ≤ 1 h, weiterhin bevorzugt ≥ 2 s bis ≤ 50 min, weiterhin bevorzugt ≥ 5 s bis ≤ 40 min, weiterhin bevorzugt ≥ 10 s bis ≤ 30 min, weiterhin bevorzugt ≥ 15 s bis ≤ 20 min, weiterhin bevorzugt ≥ 20 s bis ≤ 10 min, weiterhin bevorzugt > 30 s bis ≤ 5 min, weiterhin bevorzugt ≥ 40 s bis ≤ 2 min, weiterhin bevorzugt ≥ 50 s bis ≤ 1 min, gehalten wird.

Die erfindungsgemäß verwendbaren auflösbaren Kristalle können durch Dehnen des Polymers oder Polymernetzwerks, vorzugsweise vor oder nach der Aufnahme eines chemischen Stoffes, ausgebildet werden, wobei das Polymer oder Polymernetzwerk von dem gedehnten Zustand in einen entspannten Zustand bei einer Relaxationsrate von ≥ 10⁻⁷ %/s bis ≤ 10⁷ %/s vorzugsweise von ≥ 10⁻⁶ %/s bis ≤ 10⁶ %/s, bevorzugt von ≥ 10⁻⁵ %/s bis ≤ 10⁵ %/s, weiter bevorzugt von ≥ 10⁻⁴ %/s bis ≤ 10⁴%/s, weiter bevorzugt von ≥ 10⁻³ %/s bis ≤ 10³ %/s, weiter bevorzugt von ≥ 10⁻² %/s bis ≤ 10² %/s, sowie 10 %/s ± 2 überführt wird und/oder die auflösbaren Kristalle durch Abkühlen des gedehnten Polymers oder Polymernetzwerkes von einer Temperatur oberhalb des Triggerpunktes auf eine Temperatur auf oder unterhalb des Triggerpunktes ausgebildet werden.

Bei dem erfindungsgemäß verwendbaren, auflösbare Kristalle aufweisenden Polymer oder Polymernetzwerk können sich die Kristalle in dem gespannten, formstabilen, Zustand des Polymers oder Polymernetzwerks durch Einwirken eines äußeren Reizes beim Triggerpunkt auflösen, wobei der Triggerpunkt innerhalb eines definierbaren Bereiches frei einstellbar sein kann.

Das erfindungsgemäß verwendbare, zerreißbare Kristalle aufweisende Polymer oder Polymernetzwerk kann wenigstens ein oder mehrere Additive, vorzugsweise mit ≥ 0 Gew.-% bis ≤ 70 Gew.-%, bevorzugt ≥ 3 Gew.-% bis ≤ 60 Gew.-%, weiter bevorzugt ≥ 5 Gew.-% bis ≤ 50 Gew.-%, noch bevorzugt ≥ 7 Gew.-% bis ≤ 40 Gew.-%, außerdem bevorzugt ≥ 9 Gew.-% bis ≤ 30 Gew.-% und insbesondere bevorzugt ≥ 10 Gew.-% bis ≤ 25 Gew.-% bezogen auf das Gesamtgewicht des Polymers oder Polymernetzwerkes, aufweisen, die zur Erniedrigung oder Erhöhung der Glasübergangstemperatur und/oder zur Erhöhung oder Erniedrigung der Kristallisationsrate des Polymers oder Polymernetzwerkes geeignet sind.

Erfindungsgemäß wurde gefunden, dass sich mit Hilfe derartiger Additive, die zur Senkung oder Erhöhung der Glasübergangstemperatur des Polymers oder Polymernetzwerkes geeignet sind, der Bereich der einstellbaren Triggerpunkte erweitern lässt.

Das erfindungsgemäß verwendbare, auflösbare Kristalle aufweisende Polymer oder Polymernetzwerk kann beim Auflösen der auflösbaren Kristalle das Polymer oder Polymernetzwerk unter Aufnahme latenter Schmelzwärme abkühlen. Das erfindungsgemäß verwendbare Polymer oder Polymernetzwerk kann sich unter Aufnahme latenter Schmelzwärme auch unter die Umgebungstemperatur des Polymers oder Polymernetzwerkes abkühlen.

Als Polymer oder Polymernetzwerk können die unterschiedlichsten Materialien verwendet werden, wobei für jedes Material innerhalb der angegebenen Grenzen für die Dehnungsrate, die Haltezeit, die Relaxationsrate und die Umgebungstemperatur die optimalen Einstellparameter durch eine Variation der Parameter ermittelt werden müssen, um auflösbare Kristalle in bestimmter Menge und Größe und mit entsprechenden Triggerpunkten in dem Polymer oder Polymernetzwerk erzeugen zu können.

Die auflösbaren Kristalle zeichnen sich ferner dadurch aus, dass sich die Kristalle durch Einwirken eines äußeren Reizes bei Erreichen einer Kollabierungsschwelle auflösen können, wobei der Triggerpunkt innerhalb eines definierbaren Bereiches frei einstellbar ist. Zerreißen der auflösbaren Kristalle bedeutet, dass die Kristalle nicht im klassischen Sinne schmelzen sondern zerstört werden.

Bei bisher bekannten Polymeren und Polymernetzwerken mit Formgedächtniseigenschaften ist die Kollabierungsschwelle eine Materialkonstante, die nicht durch einen athermischen äußeren Reiz erreicht wird, sondern nur durch einen thermischen Reiz, der der Schmelzwärme der Kristallite entspricht, wohingegen bei dem erfindungsgemäß verwendbaren Polymer oder Polymernetzwerk die Kollabierungsschwelle bei ein und demselben Material in weiten Grenzen variabel einstellbar ist und durch einen athermischen äußeren Reiz erreicht werden kann.

Durch die variable Einstellbarkeit der Kollabierungsschwelle bzw. Triggerpunkt kann das erfindungsgemäß verwendbare Polymer oder Polymernetzwerk unabhängig von seinem Material auf eine große Anzahl von Einsatzzwecken speziell abgestimmt werden, so dass sich die Anwendungsmöglichkeiten des erfindungsgemäßen Polymernetzwerkes gegenüber bekannten Polymernetzwerken erheblich erhöht.

Mit dem erfindungsgemäß verwendbaren Polymer oder Polymernetzwerk, dass gemäß dem erfindungsgemäßen Verfahren erhalten worden ist, können vorteilhafterweise Schrumpfverhältnisse von bis zu 15:1 und/oder Schwellverhältnisse von bis zu 1:5 erreicht werden.

Das erfindungsgemäß verwendbare, zerreißbare Kristalle aufweisende Polymer oder Polymernetzwerk kühlt sich beim Zerreißen der Kristalle unter anderem unter Aufnahme latenter Schmelzwärme unter die Umgebungstemperatur des Polymers oder Polymernetzwerks ab, so dass das Polymer oder Polymernetzwerk als Kältemittel bzw. als Kältespeichermittel genutzt werden kann.

Für das Polymer oder Polymernetzwerk können vorteilhafterweise kostengünstige nachwachsende Rohstoffe verwendet werden, wie Naturkautschuk.

Nach einer vorteilhaften Ausgestaltung der Erfindung kann der äußere Reiz als ein thermischer Reiz und/oder ein mechanischer Reiz und/oder eine Kontaktierung mit einem chemischen Stoff und/oder eine elektromagnetische Strahlung und/oder ein elektrisches Feld und/oder ein magnetisches Feld und/oder ein Schall und/oder eine radioaktive Strahlung ausgebildet sein.

Außerdem kann man in vorteilhafter Weise bei dem erfindungsgemäß verwendbaren, auflösbare Kristalle aufweisenden Polymer oder Polymernetzwerk die Triggertemperatur variabel in einem Temperaturbereich physikalisch, vorzugsweise durch den Gehalt an Additiv/en, die zur Erniedrigung oder Erhöhung der Glasübergangstemperatur und/oder Erniedrigung oder Erhöhung der Kristallisationsrate, Erniedrigung oder Erhöhung der Dehnung, Erniedrigung oder Erhöhung der Dehnungsrate, Erniedrigung oder Erhöhung der Konzentration bei Kontakt mit einem chemischen Stoff des Polymers oder Polymernetzwerkes geeignet sind, einstellen.

Die Triggertemperatur kann in einem Temperaturbereich von ≥ -80 °C bis ≤ 400 °C, vorzugsweise von ≥ -50 °C bis ≤ 200 °C, weiter bevorzugt von ≥ -35 °C bis ≤ 100 °C, noch bevorzugt von ≥ -25 °C bis ≤ 50 °C und insbesondere bevorzugt von ≥ 10 °C bis ≤ 40 °C frei einstellbar sein.

Dadurch, dass die Triggertemperatur in einem weiten Temperaturbereich physikalisch beliebig einstellbar ist, kann das Anwendungsfeld des erfindungsgemäßen Polymernetzwerkes deutlich erhöht werden und optimal an die entsprechenden Anforderungen angepasst werden.

Das Polymer oder Polymernetzwerk weist nach einer weiter vorteilhaften Ausgestaltung der Erfindung ein Netzkettenmolekulargewicht von ≥ 500 g/mol bis ≤ 10⁷ g/mol, bevorzugt von > 10³ g/mol bis ≤ 10⁵ g/mol, besonders bevorzugt von ≥ 5*10³ g/mol bis ≤ 10⁴ g/mol, auf.

Ferner weist das erfindungsgemäß verwendbare, zerreißbare Kristalle aufweisende Polymer oder Polymernetzwerk vorzugsweise einen Vernetzungsgrad von ≥ 10⁻³ % bis ≤ 10 %, bevorzugt von ≥ 5*10⁻³ % bis ≤ 5 %, besonders bevorzugt von ≥ 10⁻² % bis ≤ 1 %, auf.

Weiter bevorzugt weist das erfindungsgemäß verwendbare Polymer oder Polymernetzwerk nach der Dehnung im gespannten, formstabilen, kristallisierten Zustand einen Kristallinitätsgrad von ≥ 1 % bis ≤ 80 %, bevorzugt von ≥ 5 % bis ≤ 50 %, besonders bevorzugt von ≥ 10 % bis ≤ 30 %, auf.

Die in dem gespannten, formstabilen, Zustand vorliegenden Kristalle sind vorzugsweise als Lamellenkristalle, Nadelkristalle, Shish-Kebab-Kristalle oder Mizellenkristalle ausgebildet.

Weiter bevorzugt weisen die Kristalle bei dem erfindungsgemäß verwendbaren Polymer oder Polymernetzwerk nach der Dehnung im gespannten, formstabilen, kristallisierten Zustand > 10 % bis ≤ 100 %, vorzugsweise ≥ 15 % bis ≤ 95 %, weiter bevorzugt ≥ 20 % bis ≤ 80 %, noch weiter bevorzugt ≥ 30 % bis ≤ 70 %, und insbesondere bevorzugt ≥ 40 % bis ≤ 60 %, aller Kristalle, vorzugsweise Lamellenkristalle, Nadelkristalle, und/oder Mizellen-Kristalle, eine Ausrichtung in die Richtung oder eine statistische Ausrichtung in die das Polymer oder das Polymernetzwerk gedehnt ist, auf.

Weiterhin bevorzugt ist ein Polymer oder Polymernetzwerk verwendbar, welches nach der Dehnung im gespannten, formstabilen Zustand Kristalle aufweist, bevorzugt Lamellenkristalle, wobei die Lamellenkristalle mit einem Anteil von ≥ 5 % bis ≤ 100 %, vorzugsweise ≥ 20 % bis ≤ 90 %, weiter bevorzugt ≥ 30 % bis ≤ 80 %, noch weiter bevorzugt ≥ 40 % bis ≤ 70 %, und insbesondere bevorzugt ≥ 50 % bis ≤ 60 %, vorliegen.

Sind die in dem gespannten, formstabilen Zustand vorliegenden Kristalle als Lamellenkristalle ausgebildet, können die Lamellenkristalle vorzugsweise eine Lamellendicke von ≥ 1 nm bis ≤ 50 nm, bevorzugt von ≥ 3 nm bis ≤ 30 nm, besonders bevorzugt von ≥ 5 nm bis ≤ 25 nm, aufweisen.

Sind die in dem gespannten, formstabilen Zustand vorliegenden Kristalle als Nadelkristalle ausgebildet, können die Nadelkristalle vorzugsweise eine Nadellänge von ≥ 10 nm bis ≤ 2000 nm, bevorzugt von ≥ 15 nm bis ≤ 1500 nm, besonders bevorzugt von ≥ 20 nm bis ≤ 1000 nm, aufweisen.

Sind die in dem gespannten, formstabilen Zustand vorliegenden Kristalle als Mizellenkristalle ausgebildet, können die Mizellenkristalle vorzugsweise eine Mizellengröße von ≥ 1 nm bis < 50 nm, bevorzugt von ≥ 3 nm bis ≤ 30 nm, besonders bevorzugt von ≥ 5 nm bis ≤ 15 nm, aufweisen.

Das erfindungsgemäß verwendbare Polymer oder Polymernetzwerk kann in dem gespannten, formstabilen Zustand ein Elastizitätsmodul parallel zur Dehnungsrichtung von ≥ 10 MPa bis < 400 GPa, bevorzugt von ≥ 50 MPa bis ≤ 100 GPa, besonders bevorzugt von ≥ 70 MPa bis ≤ 1 GPa, aufweisen.

Ferner kann das Polymer oder Polymernetzwerk in dem gespannten, formstabilen Zustand eine Zugfestigkeit parallel zur Dehnungsrichtung von ≥ 1 MPa bis ≤ 100 MPa, bevorzugt von ≥ 20 MPa bis ≤ 80 MPa, besonders bevorzugt von ≥ 30 MPa bis ≤ 60 MPa, aufweisen.

Durch die durch dehnungsinduzierte Kristallisation erzeugten Kristalle verringert sich vorzugsweise die Transparenz des Polymers oder Polymernetzwerkes bei Raumtemperatur um einen Faktor von 1000 bis 1,12, bevorzugt um einen Faktor von 100 bis 1,5, besonders bevorzugt um einen Faktor von 10 bis 1 im Wellenlängenbereich von 1 dm bis 1 nm.

Ferner wird die Permeationsfähigkeit des Polymers oder Polymernetzwerkes gegenüber Gasen und Flüssigkeiten durch die dehnungsinduzierte Kristallisation metastabiler Kristalle bei Raumtemperatur vorzugsweise um einen Faktor 10⁵ bis 1,5, bevorzugt um einen Faktor 10² bis 2, besonders bevorzugt um einen Faktor 10 bis 5, reduziert.

Die für das Polymer oder Polymernetzwerk ausgewählten Polymere sollten aufgrund ihrer Konfiguration theoretisch kristallisierbar sein. Demzufolge weisen die ausgewählten Polymere geeignet zur Verwendung bei der vorliegenden Erfindung vorzugsweise eine isotaktische oder eine syndiotaktische Konfiguration auf. Das Polymer oder Polymernetzwerk geeignet zur Verwendung bei der vorliegenden Erfindung weist vorzugsweise wenigstens eine oder mehrere Polymerverbindung/en ausgewählt aus der Gruppe der folgenden Polymere auf: konfigurativ-kristallisationsfähige Polymere, isotaktische Polymere, syndiotaktische Polymere, Naturkautschuk, Polyisopren, Polyethylenterephthalat, Polycarbonat, isotaktisches Polystyrol und/oder ein Copolymer.

Nachfolgend wird ein Verfahren zum Einstellen einer Kollabierungsschwelle von auflösbaren Kristallen beschrieben, welches zur Steuerung einer Kraft die von wenigstens einem Befestigungspunkt auf wenigstens einen Kraftangriffspunkt wirkt, erfindungsgemäß verwendbar ist:
A) Bereitstellen eines Polymers oder Polymernetzwerkes;
B) Überführen des Polymers oder Polymernetzwerkes von einem ungedehnten Ausgangszustand in einen gedehnten Zustand mittels einer Dehnungsrate des Polymernetzwerkes von ≥ 10⁻⁷ %/s bis ≤ 10⁷ %/s, vorzugsweise von ≥ 10⁻⁶ %/s bis ≤ 10⁶ %/s, bevorzugt von ≥ 10⁻⁵ %/s bis ≤ 10⁵ %/s, weiter bevorzugt von ≥ 10⁻⁴ %/s bis ≤ 10⁴ %/s, weiter bevorzugt von ≥ 10⁻³ %/s bis ≤ 10³ %/s, weiter bevorzugt von ≥ 10⁻² %/s bis ≤ 10² %/s, sowie 10 %/s ± 2,
C) Halten des Polymers oder Polymernetzwerkes in dem gedehnten Zustand mit einer Haltezeit von ≥ 0 s bis ≤ 1 d, vorzugsweise ≥ 0,05 s bis ≤ 12 h, weiter bevorzugt ≥ 0,1 s bis < 6 h, noch bevorzugt ≥ 0,5 s bis ≤ 3 h, weiterhin bevorzugt ≥ 1 s bis ≤ 1 h, weiterhin bevorzugt ≥ 2 s bis ≤ 50 min, weiterhin bevorzugt ≥ 5 s bis ≤ 40 min, weiterhin bevorzugt ≥ 10 s bis < 30 min, weiterhin bevorzugt ≥ 15 s bis ≤ 20 min, weiterhin bevorzugt ≥ 20 s bis ≤ 10 min, weiterhin bevorzugt ≥ 30 s bis ≤ 5 min, weiterhin bevorzugt ≥ 40 s bis ≤ 2 min, weiterhin bevorzugt ≥ 50 s bis ≤ 1 min;
D) Überführen des Polymers oder Polymernetzwerkes von dem gedehnten Zustand in einen formstabilen Zustand bei einer Relaxationsrate von ≥ 10⁻⁷ %/s bis ≤ 10⁷ %/s vorzugsweise von ≥ 10⁻⁶ %/s bis ≤ 10⁶ %/s, bevorzugt von ≥ 10⁻⁵ %/s bis ≤ 10⁵ %/s, weiter bevorzugt von ≥ 10⁻⁴ %/s bis ≤ 10⁴ %/s, weiter bevorzugt von ≥ 10⁻³ %/s bis ≤ 10³ %/s, weiter bevorzugt von ≥ 10⁻² %/s bis ≤ 10² %/s, sowie 10 %/s ± 2, wobei im entspannten Zustand das Polymer oder Polymernetzwerk Kristalle in einem formstabilisierenden Zustand aufweist; und
E) Optional Abkühlen des gedehnten Polymers oder Polymernetzwerkes von einer Temperatur oberhalb des Triggerpunktes auf eine Temperatur auf oder unterhalb des Triggerpunktes, wobei Schritt E) vor, während und/oder nach Schritt D) ausführbar ist.

Das bereitgestellte Polymer oder Polymernetzwerk wird zunächst von einem ungedehnten Ausgangszustand in einen gedehnten Zustand mittels einer Dehnungsrate des Polymernetzwerkes von ≥ 10⁻⁷ %/s bis ≤ 10⁷ %/s, bevorzugt von ≥ 10⁻⁵ %/s bis ≤ 10⁵ %/s, besonders bevorzugt von 10⁻³ %/s bis ≤ 10³ %/s überführt. In diesem gedehnten Zustand wird das Polymer oder Polymernetzwerk anschließend für eine bestimmte Zeit, vorzugsweise einer Haltezeit von ≥ 0 s bis ≤ 1 d, vorzugsweise ≥ 0,05 s bis ≤ 12 h, weiter bevorzugt ≥ 0,1 s bis < 6 h, noch bevorzugt ≥ 0,5 s bis ≤ 3 h, weiterhin bevorzugt ≥ 1 s bis ≤ 1 h, weiterhin bevorzugt ≥ 2 s bis ≤ 50 min, weiterhin bevorzugt ≥ 5 s bis ≤ 40 min, weiterhin bevorzugt ≥ 10 s bis < 30 min, weiterhin bevorzugt ≥ 15 s bis ≤ 20 min, weiterhin bevorzugt ≥ 20 s bis ≤ 10 min, weiterhin bevorzugt ≥ 30 s bis ≤ 5 min, weiterhin bevorzugt ≥ 40 s bis ≤ 2 min, weiterhin bevorzugt ≥ 50 s bis ≤ 1 min, gehalten. Von dem gehaltenen, gedehnten Zustand wird das Polymer oder Polymernetzwerk in einen gespannten, formstabilen Zustand bei einer Relaxationsrate von ≥ 10⁻⁷ %/s bis ≤ 10⁷ %/s, bevorzugt von ≥ 10⁻⁵ %/s bis ≤ 10⁵ %/s, besonders bevorzugt von ≥ 10⁻³ %/s bis ≤ 10³ %/s, überführt, wobei im gespannten, formstabilen Zustand das Polymer oder Polymernetzwerk Kristalle aufweist. Der formstabile Zustand kann mittels eines äußeren Reizes bei Überschreitung der Kollabierungsschwelle durch auflösen der Kristalle in einen ungespannten Zustand durch Relaxation oder in einen gespannten durch Aufbau einer Kraft auf einen Kraftangriffspunkt übergehen.

Nach einer bevorzugten Ausgestaltung weist das erfindungsgemäß verwendbare Polymer oder Polymernetzwerk im entspannten Zustand in Schritt D) eine Dehnung von ≥ 200 % bis ≤ 1200 %, bevorzugt von ≥500 % bis ≤ 1100 %, besonders bevorzugt von ≥ 700 % bis ≤ 1000 %, bezogen auf den Ausgangszustand auf. Der Ausgangszustand ist dabei der Zustand bei dem die Dehnung des Polymernetzwerkes 0 % ist. Demnach ist es mittels des erfindungsgemäßen Verfahrens möglich, besonders hohe Dehnungen des Polymernetzwerkes zu erzeugen, ohne dass sich das Polymer oder Polymernetzwerk nach der Dehnung sofort in den Ausgangszustand zurückzieht. Dies passiert erst, sobald ein äußerer Reiz auf die auflösbaren Kristalle ausgeübt wird. Somit ist eine besonders hohe formstabile Dehnung des Polymernetzwerks möglich, wodurch das mögliche Einsatzgebiet des Polymernetzwerkes gegenüber bekannten Polymernetzwerken deutlich vergrößert wird.

Dem erfindungsgemäßen zerreißbare Kristalle aufweisende Polymer oder Polymernetzwerk können wenigstens ein oder mehrere Additive, vorzugsweise mit ≥ 0 Gew.-% bis ≤ 70 Gew.-%, bevorzugt ≥ 3 Gew.-% bis ≤ 60 Gew.-%, weiter bevorzugt ≥ 5 Gew.-% bis ≤ 50 Gew.-%, noch bevorzugt ≥ 7 Gew.-% bis ≤ 40 Gew.-%, außerdem bevorzugt ≥ 9 Gew.-% bis ≤ 30 Gew.-% und insbesondere bevorzugt ≥ 10 Gew.-% bis ≤ 25 Gew.-% bezogen auf das Gesamtgewicht des Polymers oder Polymernetzwerkes, die zur Erniedrigung oder Erhöhung der Glasübergangstemperatur bzw. zur Erhöhung oder Erniedrigung der Kristallisationsrate des Polymers oder Polymernetzwerkes geeignet sind, zugesetzt sein.

Die Erfindung betrifft weiter die Verwendung eines wie vorstehend aus- und weitergebildeten Polymers oder Polymernetzwerkes als ein Mittel unter Aufnahme bzw. Abgabe von Lösungsmittel mit Dimensionsänderungseigenschaften, insbesondere Schrumpfeigenschaften und/oder Dehnungseigenschaften. Insbesondere für eine zyklische Dimensionsänderung unter Aufnahme bzw. Abgabe von Lösungsmittel.

Insbesondere betrifft die Erfindung die Verwendung eines vorbeschriebenen Polymers oder Polymernetzwerks zur Steuerung einer Kraft, die von wenigstens einem Befestigungspunkt auf wenigstens einen Kraftangriffspunkt wirkt, beispielsweise die Verwendung des Polymers und/oder Polymernetzwerks als:
- Sensor zur qualitativen und/oder quantitativen Detektion von chemischen Stoffen;
- Einrichtung zum Bewegen wenigstens eines Bauteils;
- Einrichtung zum Öffnen und/oder Schließen wenigstens einer Öffnung.

Die Erfinder haben gefunden, dass sich Formgedächtnispolymere als solche oder in Kombination mit einem erfindungsgemäßen, auflösbare Kristalle aufweisenden Polymer oder Polymernetzwerk, zumindest für einige der vorgenannten Verwendungen, vorteilhaft einsetzen lassen. Dies gilt auch für die nachstehenden Artikel.

Ein weiterer Gegenstand der vorliegenden Erfindung betrifft Artikel, aufweisend wenigstens ein Polymer und/oder Polymernetzwerk, wobei das Polymer und/oder Polymernetzwerk mit wenigstens einem Befestigungspunkt und wenigstens einem Kraftangriffspunkt verbunden ist, wobei auf den Kraftangriffspunkt:
- unter Aufnahme eines oder mehrerer chemischer Stoffe aus der Gas- und/oder Flüssigphase eine Kraft wirkt und nach Abgabe des chemischen Stoffes oder der chemischen Stoffe diese Kraft sich wieder sich zumindest teilweise oder vollständig abbaut; oder
- unter Aufnahme eines oder mehrerer chemischer Stoffe aus der Gas- und/oder Flüssigphase eine wirkende Kraft abbaut und nach Aufnahme des chemischen Stoffes oder der chemischen Stoffe sich die Kraft zumindest teilweise oder vollständig wieder aufbaut;
   wobei der Kraftaufbau oder Kraftabbau mehrfach wiederholbar ist.

Ein weiterer Gegenstand betrifft die Verwendung des erfindungsgemäßen Polymer oder Polymernetzwerks als Aktor.

Das erfindungsgemäß verwendbare Polymer oder Polymernetzwerk kann beispielsweise als lösemittelsensitiver Aktor verwendet werden, beispielsweise in Form von Brandschutzklappen oder Rauchschutzklappen, welche durch die Eigenschaften des Polymers oder Polymernetzwerkes ab einer vorgegebenen Kraftschwelle und ohne weitere Energieversorgung, Steuerung oder dergleichen, aufgrund der Kraft die auf einen Kraftangriffspunkt bei Aufnahme eines chemischen Stoffes wirkt, geschlossen werden können.

Ferner kann das Polymer oder Polymernetzwerk für medizinische Anwendungen verwendet werden. Zum Beispiel kann das Polymer oder Polymernetzwerk als lösemittelsensitiver Aktor zum Abklemmen von Wunden verwendet werden, beispielsweise in Form einer Klemmvorrichtung mit einem Riemen, welcher aus einem Material geformt ist, welches das erfindungsgemäß verwendbare Polymer oder Polymernetzwerk aufweist. Eine solche Klemmvorrichtung kann dabei beispielsweise zum Abklemmen oder Abschnüren von Extremitäten bei Schlagaderverletzungen verwendet werden.

Ferner ist es möglich das erfindungsgemäß verwendbare Polymer oder Polymernetzwerk als Lösemittel-Threshold-Detektor (Lösemittel-Schwellwert-Detektor) zu verwenden. Ein derartiger Lösemittel-Threshold-Detektor kann als Nachweis einer Überschreitung einer Maximallösemittelmenge verwendet werden, indem die Kraft die auf den Kraftangriffspunkt wirkt bestimmt wird, wobei ein Lösemittel, nach entsprechender Eichung, quantitativ und/oder qualitativ bestimmt werden kann.

Bei einem Überschreiten der Triggertemperatur kann beispielsweise durch das kollabieren des Lösemittel-Threshold-Detektors über die auftretende plötzliche Kraftänderung eine weitere Aktion gekoppelt sein, wie das schalten eines Alarms oder dergleichen.

Außerdem kann die aufgrund der Lösemittelmenge auf und abnehmende Kraft die auf wenigstens einen Kraftangriffspunkt wirkt, für aktuatorische Zwecke, zum Beispiel das Verstellen eines Zeigers, die Steuerung oder Regelung durch Öffnen oder Schließen von Ventilen oder Klappen, ausgenutzt werden, wobei in diesem Fall der Lösemittel-Threshold-Detektor neben der sensorischen Aufgabe gleichzeitig als Aktuator dient.

Beispielsweise kann ein solcher Lösemittel-Threshold-Detektor als Sensor zur Überwachung von Kühl- und Tiefkühlketten verwendet werden. Die Qualität von Tiefkühl-, Gefrier- sowie Kühlprodukten wird nachhaltig von der Einhaltung bestimmter Maximaltemperaturen in der Kühlkette, vom Hersteller des gekühlten Produktes über den Einzelhandel bis hin zum Endverbraucher, beeinflusst. Dafür kann der Lösemittel-Threshold-Detektor in Form einer dünnen Folie hergestellt werden, welche anschließend uniaxial oder biaxial gedehnt wird und in dem gedehnten Zustand auflösbare Kristalle ausbildet. In diesem gedehnten Zustand verbleibt der Lösemittel-Threshold-Detektor solange bis aufgrund einer Temperaturzunahme, beispielsweise die Luftfeuchtigkeit steigt, was zu einer Ausbildung einer Kraft auf einen Kraftangriffspunkt wirkt, welcher ab einem vorgegeben Wert eine Aktion auslöst, beispielsweise einen optischen und/oder akustischen Alarm auslöst oder dergleichen. Der Lösemittel-Threshold-Detektor wird ferner mit einem Siegel verbunden, welches die Einhaltung der Kühlkette signalisiert. Der mit dem Siegel versehene Lösemittel-Threshold-Detektor wird anschließend auf das gekühlte Produkt geklebt. Vor dem Aufkleben wird der Aufdruck vorzugsweise mit einem Schnittmuster versehen, welches eine Manipulation durch Umkleben oder gar eine Neuprogammierung verhindert. Beim Überschreiten der Luftfeuchtigkeit oder der Temperatur kann sich der Lösemittel-Threshold-Detektor so stark zusammenziehen, dass das Siegel beschädigt wird, was eine Unterbrechung der Kühlkette anzeigt.

Weiter ist es möglich das Polymer oder Polymernetzwerk als Lösungsmitteldetektor zu verwenden, wobei hierbei der äußere Reiz durch eine Lösungsmitteldampf-Konzentration, beispielsweise in Form von Chloroform oder Toluol, gebildet wird, welche das Auftreten einer Kraft auf einen Kraftangriffspunkt innerhalb des Lösungsmitteldetektors initiiert.

Der Gegenstand der vorliegenden Anmeldung wird anhand der nachstehenden Beispiele 1 bis 4 weiter erläutert.

Für die Versuche wurde als Naturkautschuk Standard Malaysian Rubber - SMR10 verwendet, welcher für 10 min unter Verwendung einer heizbaren Doppel-Walze bei 80° C mastiziert, anschließend mit Dicumylperoxid (DCP) für weitere 5 min gemischt und in einer Heizpresse bei 160° C für 35 min vernetzt wurde. Ein Vernetzungsgrad von 0,2% wurde unter Verwendung 0,2 Teile pro hundert Kautschuk (pphr) DCP erhalten. Das Polymer (Kautschuk) wurde bei 60° C auf 950% gedehnt, wobei der Kautschuk anschließend seinen formstabilen Zustand bei einer Dehnung von 900% annahm.

Bei der zur Messung verwendeten Kammer handelte es sich um eine Luft temperierte Kammer. Ferner wurden als Klemmen zwei Film-Spannklemmen verwendet. Eine der Klammern war mit einem Kraftaufnehmer mit einem Messbereich von bis zu 20 N und einer Reproduzierbarkeit von ± 0,003 N verbunden.

Um einen konstanten Dampfstrom herzustellen, wurde das reine Lösungsmittel zur Messzelle aus einem Lösungsmittelverdampfer zugeführt. Druckmessungen in der Zelle wurden mit kapazitiven Druckwandlern (MKS Baratron 621C) bei einer konstanten Temperatur von 150 ° C durchgeführt, während die Auslass-Steuervorrichtung (MKS Baratron Typ 621 C) einen konstanten Druck um die Probe aufrecht hielt. Die Genauigkeit des angegebenen Drucks ist besser als ± 0,1 mbar und die Ablesegenauigkeit des Messwerts der Druckmessung ist ± 0,5%.

Alle verwendeten Lösungsmittel sind von Sigma Aldrich mit einer Reinheit von 99,5%, die durch Einfrieren und Auftauen weiter gereinigt wurden.

### Beispiel 1

Es wurde ein natürlicher Kautschuk nach Beispiel 3 mit einem Grad an Vernetzung (Anteil an vernetzten Monomereinheiten) von 0,2% verwendet. Alle Proben wurden identisch programmiert, d.h. die Proben wurden in einen formstabilen Zustand mit einer Dehnung von 900 % überführt, welche eine Trigger-Temperatur von 33 ± 0,5° C aufwiesen. Alle Proben wurden in dem spannungsfreien Zustand zwischen zwei Klemmen, von denen eine einen Piezo-Kraftaufnehmer aufwies, fixiert und in einer Kammer angeordnet, welche zur Messung und Einstellung des Lösemitteldruckes, Temperatur und Kraft geeignet war. Vor der Lösungsmitteldampfaufnahme wurde die Kammer auf einen Druck unter 10 Pa evakuiert, wobei in Fig. 2 Anfang Kurve 1 der Zustand vor der Lösungsmitteldampfaufnahme gezeigt ist. In einem ersten Schritt, Fig. 2 Kurve 1, wurde der Toluol-Dampfdruck auf etwa 80 % (∼ 2500 Pa) seines Gleichgewichtsdampfdruck p^{LV} eingestellt. Während dieses Experiments wurde die Temperatur konstant bei 20° C gehalten. Die Polymerprobe reagierte mit einem Kraftaufbau von etwa 1,7 N innerhalb von 15 min. Um zu sehen, ob die Probe in den gedehnten, formstabilen Zustand zurückkehrt (0 N), wurde das Toluol unter 300 Pa evakuiert, die Vorrichtung dann auf Atmosphärendruck gebracht und die Probe ausgespannt. Überraschend zeigt sich, dass die Polymerprobe eine 800 %ige Dehnung aufwies und bei dieser Dehnung selbständig formstabil ist.

### Beispiel 2

In einem weiteren Beispiel 2 wurde in 5 Zyklen Toluol zugesetzt und in konstanten Zeitintervallen wieder entfernt. Die Messung wurde jeweils über den gesamten Zyklus durchgeführt. Das Beispiel 2 wurde unter gleichen Bedingungen, wie das Beispiel 1, durchgeführt. Nach 15 min wurde das Toluol unter 300 Pa evakuiert. Überraschenderweise nahm die anfangs aufgebaute Spannung, durch die Absenkung der Toluolkonzentration von 3,6 MPa bis auf einen Wert von 1,8 MPa ab. Die einzige Erklärung für dieses Phänomen ist, ohne darauf festgelegt zu sein, wäre beispielsweise eine Umprogrammierung der SMNR-10 Probe. Dies wäre das erste Beispiel einer Zwei-Wege-Spannungs-Antwort eines SMP's. Die Wiederholung der Erhöhung und Absenkung der Toluolkonzentration zeigt volle Reproduzierbarkeit dieses Effektes (in Fig. 2 gezeigt). Es wurde beobachtet, dass sich die Spannungsantwort proportional zur Erhöhung des Dampfdruckes ergibt. Es ist erwähnenswert, dass die Spannungsantwort nach der Evakuierung nicht auf den Ausgangswert zurückgeht. Der Ausgangswert wird auch nach 24 h nicht erreicht sondern nimmt eine Spannung von 1,7 MPa ein (nicht gezeigt). Daher wird die lösemittelempfindliche Spannungsantwort von SMNR auf Toluoldampf in eine irreversible Spannungsantwort Δσᵢᵣᵣ, die nach dem ersten Zyklus nach Abzug des Stoffes verbleibt, und eine reversible Spannungsantwort Δσᵢᵣᵣ, wie schematisch in Fig. 2 dargestellt, unterteilt.

Neben Toluol wurden weitere Lösungsmittel wie Chloroform, n-Heptan und THF sowie Aceton nach dem oben beschriebenen Verfahren über 5 Zyklen getestet. Es hat sich ergeben, dass die vom Lösungsmitteldampf abhängige Spannungsantwort für n-Heptan, Chloroform und THF entsprechend der von Toluol war.

### Beispiel 3

Es wird ein Polymernetzwerk eines 1,4-cis-Polyisoprens (Naturkautschuk) verwendet. Zur Erzeugung des konkreten Beispiel-Netzwerks, wird ein Naturkautschuk SMR10 (Standard Malaysian Rubber) mit 0,15 [Gew.]% Schwefel, 1 [Gew.]% Beschleuniger CBS (N-cyclohexyl-2benzothiazole Sulfenamide CAS#95-330) und 0,8% Antioxidans 6PPT (N-(l,3dimethylbutyl)-N-phenyl-p-phenyldiamine CAS# 793-24-8) mit Hilfe einer beheizbaren Doppelrollenwalze bei 100 °C für 15 min mastifiziert und anschließend bei 140 °C mit Hilfe einer Heißpresse für 15 min zu 3 mm dicken Platten vulkanisiert.

Dieses Polymernetzwerk wird mit einer Dehnungsrate von 1000 %/s von dem Ausgangszustand in einen gedehnten Zustand überführt. Dies erfolgt bei einer Umgebungstemperatur von 23 °C. Das gedehnte Polymer oder Polymernetzwerk wird anschließend mit einer Haltezeit von 1 min in dem gedehnten Zustand gehalten. Anschließend erfolgt ein Entspannen des Polymernetzwerkes mit einer Relaxationsrate von 100 %/s von dem gehaltenen, gedehnten Zustand in einen gedehnten formstabilen Zustand. In dem gedehnten formstabilen Zustand weist das Polymer oder Polymernetzwerk noch eine Dehnung von 800 % gegenüber dem Ausgangszustand auf. Das derart bearbeitete Polymer oder Polymernetzwerk aus 1,4-cis-Polyisopren weist eine Triggertemperatur von 28 °C und eine endotherme Wärmetönung beim Zerreißen der Kristalle und der vollständigen Rückkehr in den ursprünglichen Zustand von etwa 9 J/g auf.

## Patentansprüche

**1.** Verwendung eines Polymers oder Polymernetzwerks, welches sich in einem gedehnten Ausgangszustand befindet, als Sensor und/oder Kraftelement, **dadurch gekennzeichnet, dass** dieses Polymer oder Polymernetzwerk
- unter Aufnahme eines oder mehrerer chemischer Stoffe aus der Gas- und/oder Flüssigphase eine Kraft aufbaut und nach Abgabe des chemischen Stoffes oder der chemischen Stoffe die Kraft sich zumindest teilweise oder vollständig abbaut; oder
- unter Aufnahme eines oder mehrerer chemischer Stoffe aus der Gas- und/oder Flüssigphase eine Kraft sich zumindest teilweise oder vollständig abbaut und nach Aufnahme des chemischen Stoffes oder der chemischen Stoffe sich die Kraft aufbaut;
wobei der Kraftaufbau oder Kraftabbau mehrfach wiederholbar ist.

**1.** Verwendung des Polymers oder Polymernetzwerks nach Anspruch 1, wobei das Polymer oder Polymernetzwerk ein Formgedächtnispolymer ist.

**2.** Verwendung des Polymers oder Polymernetzwerks nach Anspruch 1 oder 2, wobei das Polymer oder Polymernetzwerk ein teilkristallines Formgedächtnispolymer.

**3.** Verwendung des Polymers oder Polymernetzwerks nach einem der Ansprüchel bis 3, wobei das Polymer oder Polymernetzwerk ein teilkristallines Formgedächtnispolymer ist, das sich bei Raumtemperatur ausschließlich dehnungsinduziert kristallisieren lässt.

**4.** Verwendung des Polymers oder Polymernetzwerks nach einem der Ansprüchel bis 4, wobei das Polymer oder Polymernetzwerk bei steigender chemischer Stoffkonzentration Zugkraft aufbaut.

**5.** Verwendung des Polymers oder Polymernetzwerks nach einem der Ansprüchel bis 5, wobei das Polymer oder Polymernetzwerk eine maximale Kraft aufbauen kann, die größer 30% der Ausgangszugkraft bei Abwesenheit der chemischen Stoffen ist.

**6.** Verwendung des Polymers oder Polymernetzwerks nach einem der Ansprüchel bis 6, wobei das Polymer oder Polymernetzwerk nach der Abgabe des chemischen Stoffes seine Kraft abbaut und dabei teilweise oder vollständig den Ausgangszustand wieder annimmt.

**7.** Verwendung des Polymers oder Polymernetzwerks nach einem der Ansprüchel bis 7, wobei das Polymer oder Polymernetzwerk seinen Kraftaufbau durch partielles oder vollständiges Auflösen der Kristallstruktur erreicht.

**8.** Verwendung des Polymers oder Polymernetzwerks nach einem der Ansprüche 1 bis 8, wobei die auftretende Kraft proportional zu der Menge des aufgenommen oder abgegebenen chemischen Stoffes zunimmt oder abnimmt.

**9.** Verwendung des Polymers oder Polymernetzwerks nach einem der Ansprüche 1 bis 9, wobei die auftretende Kraft stoffspezifisch ist.

**10.** Verwendung des Polymers oder Polymernetzwerks nach einem der vorherigen Ansprüche 1 bis 10, wobei der chemische Stoff ein bei Raumtemperatur gasförmiger oder flüssiger Stoff ist, vorzugsweise ein polares oder unpolares Lösungsmittel oder gasförmiger Stoff, oder ein Gemisch aus polarem und unpolarem Lösungsmitteln oder gasförmigen Stoffen ist, wobei das Lösungsmittel oder der gasförmige Stoff bevorzugt unpolar sind.

**11.** Verwendung des Polymers oder Polymernetzwerks nach einem der Ansprüche 1 bis 11, wobei die in dem gespannten, formstabilen, Zustand vorliegenden Kristalle mit einem Anteil von ≥ 5 % bis ≤ 100 %, vorzugsweise ≥ 20 % bis ≤ 90 %, weiter bevorzugt ≥ 30 % bis ≤ 80 %, noch weiter bevorzugt ≥ 40 % bis ≤ 70 %, und insbesondere bevorzugt ≥ 50 % bis ≤ 60 %, Lamellenkristalle sind, und vorzugsweise die Lamellenkristalle eine Lamellendicke von ≥ 1 nm bis ≤ 50 nm, bevorzugt von ≥ 3 nm bis ≤ 30 nm, besonders bevorzugt von ≥ 5 nm bis ≤ 25 nm, aufweisen.

**13.** Verwendung des Polymers oder Polymernetzwerks nach einem der Ansprüche 1 bis 12, wobei das Polymer oder Polymernetzwerk aus wenigstens einem Polymer gebildet ist, ausgewählt aus der folgenden Gruppe umfassend: elastomeres Polymer, konfigurativkristallisationsfähiges Polymer, isotaktisches Polymer, syndiotaktisches Polymer, Naturkautschuk, Polyisopren, Polyethylenterephthalat, Polycarbonat, isotaktisches Polystyrol und/oder ein Copolymer davon, gebildet ist.

**14.** Verwendung eines Polymers und/oder Polymernetzwerks nach einem der Ansprüche 1 bis 13 als:
- Sensor zur qualitativen und/oder quantitativen Detektion von Stoffen, vorzugsweise als lösemittelsensitiver Aktor;
- Kraftelement zum Bewegen wenigstens eines Bauteils;
- Kraftelement zum Öffnen und/oder Schließen wenigstens einer Öffnung.

**15.** Artikel aufweisend wenigstens ein Polymer und/oder Polymernetzwerk nach einem der Ansprüche 1 bis 13, wobei das Polymer und/oder Polymernetzwerk mit wenigstens einem Befestigungspunkt und wenigstens einem Kraftangriffspunkt verbunden ist, wobei auf den Kraftangriffspunkt:
- unter Aufnahme eines oder mehrerer chemischer Stoffe aus der Gas- und/oder Flüssigphase eine Kraft wirkt und nach Abgabe des chemischen Stoffes oder der chemischen Stoffe diese Kraft sich wieder sich zumindest teilweise oder vollständig abbaut; oder
- unter Aufnahme eines oder mehrerer chemischer Stoffe aus der Gas- und/oder Flüssigphase eine wirkende Kraft abbaut und nach Aufnahme des chemischen Stoffes oder der chemischen Stoffe sich die Kraft zumindest teilweise oder vollständig wieder aufbaut;
wobei der Kraftaufbau oder Kraftabbau mehrfach wiederholbar ist.
